(19) Europäisches Patentamt / European Patent Office / Office européen des brevets

(11) **EP 4 213 450 B1**

(12) **FASCICULE DE BREVET EUROPEEN**

(45) Date de publication et mention de la délivrance du brevet:
**11.09.2024 Bulletin 2024/37**

(21) Numéro de dépôt: **23150648.6**

(22) Date de dépôt: **09.01.2023**

(51) Classification Internationale des Brevets (IPC):
**H04L 25/03** (2006.01)   **H03H 17/06** (2006.01)
**H04L 27/26** (2006.01)   **H04B 1/00** (2006.01)

(52) Classification Coopérative des Brevets (CPC):
**H04L 25/03159; H04L 27/2662; H04L 27/2675;**
Y02D 30/70

(54) **PROCEDE DE TRAITEMENT DANS UN RECEPTEUR DE TELECOMMUNICATION SANS FIL RECEVANT UN SIGNAL MONOPORTEUSE MODULE NUMERIQUEMENT, RECEPTEUR DE TELECOMMUNICATION SANS FIL ET PROGRAMME D'ORDINATEUR ASSOCIES**

VERARBEITUNGSVERFAHREN IN EINEM DRAHTLOSEN KOMMUNIKATIONSEMPFÄNGER, DER EIN DIGITAL MODULIERTES EINZELTRÄGERSIGNAL EMPFÄNGT, DRAHTLOSER TELEKOMMUNIKATIONSEMPFÄNGER UND COMPUTERPROGRAMM DAFÜR

METHOD FOR PROCESSING IN A WIRELESS TELECOMMUNICATION RECEIVER RECEIVING A DIGITALLY MODULATED SINGLE-CARRIER SIGNAL, ASSOCIATED WIRELESS TELECOMMUNICATION RECEIVER AND COMPUTER PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.01.2022 FR 2200411**

(43) Date de publication de la demande:
**19.07.2023 Bulletin 2023/29**

(73) Titulaire: **Commissariat à l'énergie atomique et aux énergies alternatives**
**75015 Paris (FR)**

(72) Inventeurs:
• **CASSIAU, Nicolas**
**38054 Grenoble Cedex 09 (FR)**
• **LAUGEOIS, Marc**
**38054 Grenoble Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2007 071 071    US-B1- 6 651 078**

• **GHEORGHIU V ET AL: "Implementation of Single Carrier Packet Transmission with Frequency Domain Equalization", VEHICULAR TECHNOLOGY CONFERENCE, 2008. VTC 2008-FALL. IEEE 68TH, IEEE, PISCATAWAY, NJ, USA, 21 September 2008 (2008-09-21), pages 1 - 5, XP031352367, ISBN: 978-1-4244-1721-6**

EP 4 213 450 B1

**Description**

**Domaine technique :**

L'invention se situe dans le domaine de la transmission mono-porteuse avec égalisation fréquentielle.

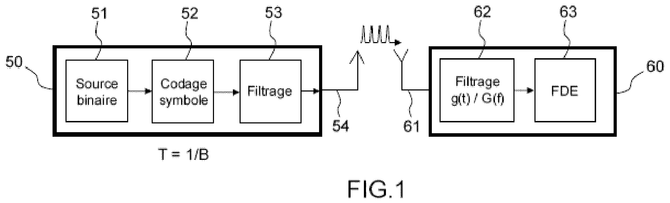

Comme représenté en figure 1, une chaîne de télécommunication sans fil mono-porteuse (SC pour Single Carrier en anglais) comprend un émetteur 50 mono-porteuse comportant :

- une source binaire 51,
- un bloc de codage 52 permettant de « mapper » M bits en une valeur analogique dans le plan complexe conformément à un type de modulation numérique (par exemple, mais de façon non limitative, QAM, AKQ, FSK, PSK) définissant une constellation de symboles ; notons $T = \frac{1}{B}$ le rythme de ces symboles complexes,
- un filtre de mise en forme 53 permettant de limiter la bande du signal et les interférences entre symboles (ISI),
- une antenne d'émission 54 émettant sur la porteuse le signal filtré ;

et un récepteur 60 comportant, dans le cas considéré, notamment :

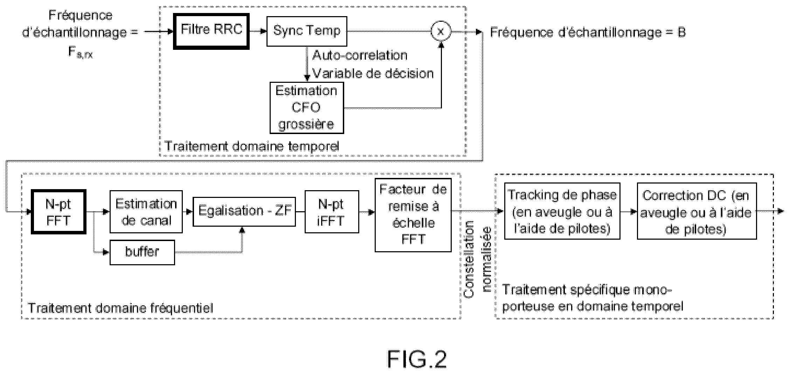

- une antenne de réception 61,
- un filtre 62, et
- un organe décisionnel 63 permettant de retrouver les symboles complexes, de type FDE (frequency domain equalizer), dont le rôle est d'estimer les paramètres du canal (notamment les atténuations fréquentielles), d'égaliser en fréquence les échantillons fréquentiels en fonction des paramètres de canal estimés et de revenir dans le domaine temporel par une opération de transformée de Fourier inverse. L'utilisation d'un égaliseur FDE 63 impose une mise en trames des symboles complexes, qui les groupe par paquets de N, l'égaliseur 63 travaillant sur cette taille de paquet (cf. Figure 2).

Comme on peut le voir sur la Figure 1, le filtrage en réception peut se faire soit dans le domaine temporel (g(t)), soit dans le domaine fréquentiel (G(f)).

La Figure 2 présente des blocs électroniques de traitement d'un récepteur 60 avec filtrage temporel. Le traitement dans le domaine temporel inclut le filtrage ainsi que la synchronisation temporelle de la trame de données. La trame étant synchronisée, la mise en oeuvre d'une transformée de Fourier discrète en temps permet ensuite la réalisation des traitements d'estimation de canal et d'égalisation dans le domaine fréquentiel. Dans le cas d'un filtrage dans le domaine temporel, N est puissance de 2 et la transformée de Fourier discrète peut utiliser une architecture rapide qui présente un avantage certain quant à la complexité calculatoire et/ou hardware. Enfin, une transformée de Fourier (discrète) inverse fournit les échantillons égalisés dans le domaine temporel au rythme symbole B. Un dernier bloc a pour rôle de corriger certains phénomènes paramètres intrinsèques à une chaîne de transmission, qui ne seront pas davantage détaillés ici.

L'échantillonnage en entrée du récepteur nécessite une fréquence d'échantillonnage supérieure à B, alors que le traitement d'égalisation nécessite un rythme d'échantillonnage égal à B. Les paragraphes suivants exposent en quoi ce sous-échantillonnage est problématique.

Condition de détection parfaite :

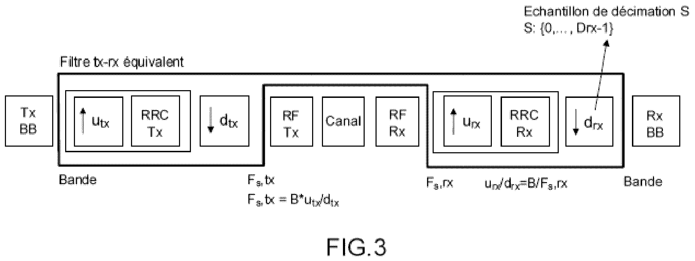

Dans cette partie, il est exposé, comment, dans le récepteur 60, retrouver parfaitement les symboles émis dans le cas d'un filtrage de réception dans le domaine temporel. Le signal avant fourniture à l'organe décisionnel 63 est filtré par le filtre de réponse impulsionnelle g(t) (par exemple correspondant au filtre équivalent tx-rx de la Figure 3). L'échantillonnage à la période T produit la réponse impulsionnelle est la suivante :

$$g_T(t) = g(t) \sum_{k=-\infty}^{+\infty} \delta(t - k\,T) = \sum_{k=-\infty}^{+\infty} g(k\,T)\, \delta(t - k\,T)$$

Afin d'annuler l'interférence inter-symbole (ISI), le signal échantillonné aux instants kT ne doit pas contenir de contributions du signal aux autres instants. Cette condition s'écrit :

$$g_T(t) = \delta(t)$$

Dans le domaine fréquentiel, cette égalité devient :

$$TF\{g(t) \sum_{k=-\infty}^{+\infty} \delta(t - k\,T)\} = TF\{\delta(t)\}$$

Les identités remarquables

$$TF\{\sum \delta(t - k\,T)\} = \frac{1}{T}\sum \delta\left(f - \frac{k}{T}\right) \text{ et } TF\{\delta(t)\} = 1$$

permettent d'écrire:

$$G(f) * \sum_{k=-\infty}^{+\infty} \delta\left(f - \frac{k}{T}\right) = 1$$

$$\frac{1}{T} \sum_{k=-\infty}^{+\infty} G\left(f - \frac{k}{T}\right) = 1$$

Cette condition montre que le spectre du filtre de mise en forme périodisé au rythme symbole doit être plat.

Le filtre rectangulaire (en fréquence) de bande *B* respecte cette condition. Dans le domaine temporel, ce filtre est un sinus cardinal, sa réponse impulsionnelle est infinie. On ne peut donc choisir ce filtre car toute troncature de sa longueur conduirait à un spectre périodisé non plat. Tout autre filtre aura une bande supérieure à $B = \frac{1}{T}$ . Il convient donc de suréchantillonner le signal d'entrée avant de le filtrer. Le facteur de suréchantillonnage est noté *x* et dans ce qui suit, il est choisi à titre d'exemple à 1,5.

Afin d'éviter d'avoir recours à des convertisseurs trop rapides, les fréquences choisies sont par exemple les fréquences les plus basses possibles répondant aux différents critères.

Le filtre est scindé, dans l'exemple considéré maintenant, en deux, une partie à l'émission et l'autre à la réception. Il s'agit alors de filtre racine de cosinus surélevé (RRC). On parle de filtrage adapté. La Figure 3 représente les sur-échantillonnage, décimation (=sous-échantillonnage) et filtrage équivalent tx-rx, de la chaîne de transmission de la figure 1, avec les différentes fréquences d'échantillonnage mises en oeuvre (la section « canal » représentant la propagation radiofréquence du signal entre l'émetteur et le récepteur, le bloc Tx BB, respectivement Rx BB représente le traitement en bande de base réalisé dans l'émetteur, respectivement le récepteur tandis que le bloc RF Tx, respectivement RF Rx, représente la transposition de fréquence vers la fréquence porteuse, respectivement depuis la fréquence porteuse). Ici, en sortie de l'émetteur, la fréquence d'échantillonnage vaut $F_{s,tx} = B \times \frac{u_{tx}}{d_{tx}}$ . Au niveau du récepteur, une chaîne de suréchantillonnage et puis de décimation est mise en place afin de descendre in fine au rythme échantillon B. Ainsi, on a $F_{s,rx} \times \frac{u_{rx}}{d_{rx}} = B$ .

Le facteur de suréchantillonnage vaut $x = \frac{u_{tx}}{d_{tx}} = \frac{d_{rx}}{u_{rx}}$ , avec par exemple $u_{tx}$ = 3, $d_{tx} = 2, u_{rx} = 4$ et $d_{rx} = 6$.

En émission, le filtre RRC tx est précédé d'un suréchantillonnage par $u_{tx}$ et suivi d'une décimation par $d_{tx}$. En réception, un suréchantillonnage par $u_{rx}$ est effectué en amont du filtre RRC Rx ; une décimation par $d_{rx}$ est effectuée en aval du filtre RRC Rx.

La Figure 4 est une illustration de la réponse fréquentielle du filtre « RRC tx + RRC rx » avant décimation par $d_{rx}$. Les fréquences représentées dans les figures sont normalisées par rapport à $B$.

La figure 5 représente la réponse fréquentielle du filtre « RC tx + RC rx » après décimation par $d_{rx}$, i.e. correspondant à un échantillonnage à la fréquence nominale B pour différentes phases de décimation.

On appelle phase de décimation le signal issu d'une décimation de facteur $d_{rx}$. Il y a $d_{rx}$ phases de décimation possibles (en fonction du peigne de décimation choisi), une seule étant sélectionnée. Soit $ech_0$, $ech_1$, ... $ech_n$ les échantillons de signal avant décimation, les différentes phases de décimation possibles correspondent aux différents sous-ensembles d'échantillons suivants (leur rang dans la numérotation n°1, ..., n°$d_{rx}$ des phases est choisi de façon arbitraire) :

$$\text{phase n°1} = \{ech_0 \ modulo(d_{rx})\} = \{ech_0, ech_{d_{rx}}, ech_{2d_{rx}}, ...\} \ ;$$

$$\text{phase n°2} = \{ech_1 \ modulo(d_{rx})\} = \{ech_1, ech_{1+d_{rx}}, ech_{1+2d_{rx}}, ...\} \ ;$$

$$\text{phase n°3} = \{ech_2 \ modulo(d_{rx})\} = \{ech_2, ech_{2+d_{rx}}, ech_{2+2d_{rx}}, ...\} \ ;$$

...

$$\text{phase n° } (d_{rx} -1) = \{ech_{d_{rx}-2} \ modulo(d_{rx})\} = \{ech_{d_{rx}-2}, ech_{2d_{rx}-2}, ech_{3d_{rx}-2}, ...\} \ ;$$

$$\text{phase n° } d_{rx} = \{ech_{d_{rx}-1} \ modulo(d_{rx})\} = \{ech_{d_{rx}-1}, ech_{2d_{rx}-1}, ech_{3d_{rx}-1}, ...\} \ ;$$

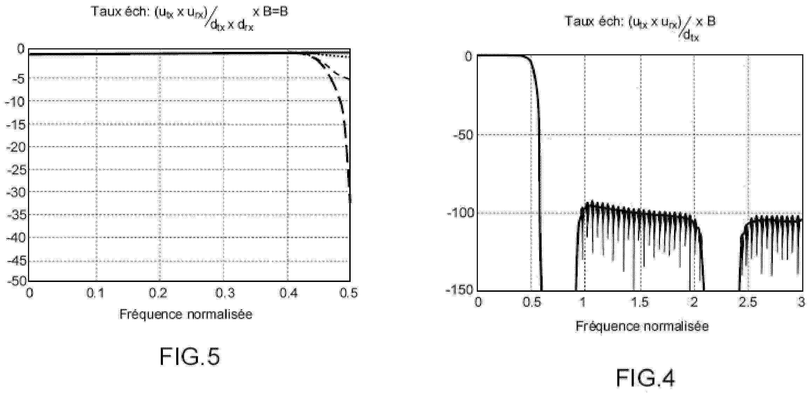

En référence à la figure 5 : on constate qu'une des phases de décimation représentées donne un filtre équivalent parfaitement plat ; les autres phases représentées montrent une décroissance de la réponse autour de $\frac{B}{2}$, la pire phase créant même un trou fréquentiel. Plus on s'éloigne du point optimal, plus on dégrade le signal. Un choix avisé de la phase de décimation choisi s'impose donc. Dans le paragraphe suivant, il est montré à quoi cette dégradation est due.

Impact de la phase de décimation

Comme l'illustre la Figure 3, la chaîne d'émission / réception ne travaille pas à la même fréquence selon l'étape de traitement. Calculons le filtre équivalent tx-rx.

Dans un premier temps, il convient de calculer le filtre équivalent en sortie du module « RRC Rx ». Soit $g_{T_e}(t)$ le filtre RC équivalent échantillonnée à $T_e$ avec $T = T_e \times d_{rx}$ de sorte que le signal de sortie de RRC Rx soit suréchantillonné d'un facteur $d_{rx}$.

$$g_{T_e}(t) = g(t) \sum_{m=-\infty}^{+\infty} \delta(t - m\,T_e) = \sum_{m=-\infty}^{+\infty} g(m\,T_e) \cdot \delta(t - m\,T_e)$$

Le spectre de ce filtre est :

$$TF\{g_{T_e}(t)\} = F_e \sum_{m=-\infty}^{+\infty} G(f - m\,F_e)$$

Soit $g_T(t)$ le filtre $g_{T_e}(t)$ décimé par $d_{rx}$ dont le peigne d'échantillonnage est décalé de $\Delta\,T_e$ avec $\Delta \in [0; d_{rx}[$. Cela revient à échantillonner $g_{T_e}(t)$ à $T + \Delta\,T_e$.

$$g_T(t) = \sum_{k=-\infty}^{+\infty} g_{T_e}(k\,T + \Delta\,T_e)\,\delta(t - k\,T - \Delta\,T_e)$$

(Remarque : à cette étape, il serait possible d'rajouter un offset temporel lié aux désalignements des peignes d'échantillonnage tx-rx, mais cela n'apporte rien.)

En remplaçant $g_{T_e}$ par son expression, on a :

$$g_T(t) = \sum_{k=-\infty}^{+\infty} \left[ \sum_{m=-\infty}^{+\infty} g(m\,T_e)\,\delta(k\,T + \Delta\,T_e - m\,T_e) \right]\,\delta(t - k\,T - \Delta\,T_e)$$

$$g_T(t) = \sum_{k=-\infty}^{+\infty} \left[ \sum_{m=-\infty}^{+\infty} g(m\,T_e) \cdot \delta\big((k\,d_{rx} + \Delta - m)\,T_e\big) \right]\,\delta\big(t - (k\,d_{rx} + \Delta)\,T_e\big)$$

En notant que $\delta((k\,d_{rx} + \Delta - m)\,T_e) = 1$ quand $m = k\,d_{rx} + \Delta$, 0 sinon, on obtient :

$$g_T(t) = \sum_{k=-\infty}^{+\infty} g\big((k\,d_{rx} + \Delta)\,T_e\big)\,\delta\big(t - (k\,d_{rx} + \Delta)\,T_e\big)$$

que l'on peut également écrire :

$$g_T(t) = g(t)\sum_{k=-\infty}^{+\infty} \delta\big(t - (k\,d_{rx} + \Delta)\,T_e\big)$$

Calculons alors la transformée de Fourier de cette expression :

$$TF\{g_T(t)\} = TF\left\{ g(t)\sum_{k=-\infty}^{+\infty} \delta\big(t - (k\,d_{rx} + \Delta)\,T_e\big) \right\}$$

$$TF\{g_T(t)\} = G(f) * TF\left\{ \sum_{k=-\infty}^{+\infty} \delta(t - k\cdot d_{rx}\,T_e - \Delta\,T_e) \right\}$$

Si on note $a(t) = \sum_{k=-\infty}^{+\infty} \delta(t - k\,d_{rx}\,T_e)$ alors $\sum_{k=-\infty}^{+\infty} \delta(t - k\,d_{rx}\,T_e - \Delta\,T_e) = a(t - \Delta\,T_e)$

et $TF\{a(t - \Delta\,T_e)\} = TF\{a(t)\}\,e^{-j\,2\pi\,\Delta\,T_e\,f}$

on obtient donc

$$TF\{g_T(t)\} = \frac{1}{T}\,G(f) * \left[ e^{-j\,2\pi\,\Delta\,T_e\,f}\,\sum_{k=-\infty}^{+\infty} \delta\left(f - \frac{k}{T}\right) \right]$$

$$TF\{g_T(t)\} = \frac{1}{T}\,G(f) * \left[ e^{-j\,2\pi\,\frac{\Delta\,T\,f}{d_{rx}}}\,\sum_{k=-\infty}^{+\infty} \delta\left(f - \frac{k}{T}\right) \right]$$

$$TF\{g_T(t)\} = \frac{1}{T}\,G(f) * \sum_{k=-\infty}^{+\infty} e^{-j\,2\pi\,\frac{\Delta\,k}{d_{rx}}}\,\delta\left(f - \frac{k}{T}\right)$$

Exemple 1 :

Si Δ = 0 on retrouve comme attendu le spectre périodisé.

$$TF\{g_T(t)\} = \frac{1}{T}\, G(f) * \left[\sum_{k=-\infty}^{+\infty} \delta\left(f - \frac{k}{T}\right)\right] = \frac{1}{T}\sum_{k=-\infty}^{+\infty} G\left(f - \frac{k}{T}\right)$$

Analysons les contributions pour $k = 0$ et $k = 1$ en $f = \frac{B}{2}$ (G étant à spectre bornée, la contribution en $f = \frac{B}{2}$ ne fait intervenir que les 2 termes $k = 0$ et $k = 1$).

$$G\left(\frac{B}{2}\right) + G\left(\frac{B}{2} - B\right) = G\left(\frac{B}{2}\right) + G\left(-\frac{B}{2}\right) = 2\, G\left(\frac{B}{2}\right)$$

Le filtre étant réel donc symétrique, $G\left(\frac{B}{2}\right) = G\left(-\frac{B}{2}\right)$, on obtient ainsi :

$$G\left(\frac{B}{2}\right) + G\left(\frac{B}{2} - B\right) = 2\, G\left(\frac{B}{2}\right)$$

Et

$$\left\|\left(\frac{B}{2}\right) + G\left(\frac{B}{2} - B\right)\right\|^2 = 4\,\left\|G\left(\frac{B}{2}\right)\right\|^2,$$

valeur égale à 1 si le filtre est adapté.

Exemple 2 :

Choisissons le jeu de paramètres suivant :

$$\begin{cases} u_{tx} = 3 \\ d_{tx} = 2 \\ u_{rx} = 4 \\ d_{rx} = 6 \end{cases}$$

Et

$$\Delta = 3.$$

$$TF\{g_T(t)\} = \frac{1}{T}\, G(f) * \sum_{k=-\infty}^{+\infty} e^{-j\pi k}\, \delta\left(f - \frac{k}{T}\right)$$

Analysons les contributions pour $k = 0$ et $k = 1$ en $f = \frac{B}{2}$. La somme des deux termes est nulle, car le filtre étant réel, sa réponse fréquentielle est symétrique :

$$G\left(\frac{B}{2}\right) - G\left(\frac{B}{2} - B\right) = G\left(\frac{B}{2}\right) - G\left(-\frac{B}{2}\right) = 0$$

Ainsi toutes les phases de décimation ne sont pas équivalentes.

Exemple 3 :

Choisissons le jeu de paramètres suivant :

$$\begin{cases} u_{tx} = 3 \\ d_{tx} = 2 \\ u_{rx} = 2 \\ d_{rx} = 3 \end{cases}$$

Et

$$\Delta = 1.$$

$$TF\{g_T(t)\} = \frac{1}{T}\, G(f) * \sum_{k=-\infty}^{+\infty} e^{-j\,2\pi\frac{k}{3}}\, \delta\left(f - \frac{k}{T}\right)$$

Analysons les contributions pour $k = 0$ et $k = 1$ en $f = \frac{B}{2}$. La somme des deux termes est nulle, car le filtre étant réel, sa réponse fréquentielle est symétrique :

$$G\left(\frac{B}{2}\right) + G\left(\frac{B}{2} - B\right) e^{-j\frac{2\pi}{3}} = G\left(\frac{B}{2}\right)\left(1 + e^{-j\frac{2\pi}{3}}\right)$$

Or $\left\lVert 1 + e^{-j\frac{2\pi}{3}} \right\rVert^2 = 1$. L'atténuation est donc de 6 dB par rapport à $2\,G\left(\frac{B}{2}\right)$.

Une chaîne de simulation a été codée et permet de vérifier l'impact du choix de la phase de décimation sur la constellation égalisée par l'estimation de canal.

**Technique antérieure :**

Une solution pour s'affranchir du choix de l'échantillon de sous-échantillonnage est de réaliser le filtre adapté dans le domaine fréquentiel. La Figure 2 évolue alors : le module de synchronisation fonctionne à nouveau sur un flux suréchantillonné d'une facteur x. La transformée de Fourier discrète, à présent de longueur N × x, ne peut plus utiliser une architecture rapide dans la mesure où, dans le cas général, x n'est pas une puissance de 2. L'estimation de canal et l'égalisation continue de travailler à la fréquence *B* puisque placées après la décimation dans le domaine fréquentiel. La décimation dans le domaine fréquentiel consiste à supprimer $N \times (x - 1)$ porteuses. Réaliser le filtrage de réception dans le domaine fréquentiel n'est donc pas possible dans l'optique d'une implémentation matérielle (la FFT ne serait pas d'une longueur puissance de deux et donc l'algorithme de DFT ne peut pas être utilisé). Il faut donc implémenter le filtre dans le domaine temporel.

Pour pouvoir utiliser une DFT, il faut réaliser le filtrage de réception et la décimation dans le domaine temporel (voir Figure 2) : la synchronisation permet de trouver le bon échantillon de sous-échantillonnage et le début de la trame. Dans Gheorghiu, V., Kameda, S., Takagi, T., Tsubouchi, K., & Adachi, F. (2008, September). Implementation of single carrier packet transmission with frequency domain equalization. In 2008 IEEE 68th Vehicular Technology Conférence (pp. 1-5). IEEE, il est proposé d'utiliser un préambule dédié à la synchronisation trame et échantillon. Ce préambule présente de bonnes propriétés de corrélations. Avec $d_{rx}$ le facteur de sous-échantillonnage en sortie du filtre, $d_{rx}$ cor-

rélateurs travaillent en parallèle, celui qui fournit la plus grande valeur de corrélation (dépassement d'un seuil) est sélectionné et donne alors l'échantillon correct de décimation.

Le choix de la phase de décimation pourrait être réalisé au niveau du module de synchronisation de la trame, comme dans Gheorghiu et al. Toutefois cette solution présenterait 2 inconvénients majeurs : les $d_{rx}$ corrélateurs travaillant en parallèle sont extrêmement coûteux en ressources matérielles dès lors que l'on travaille avec des bandes grandes et la FFT n'est pas forcément une puissance de 2.

Il existe donc un besoin de disposer d'une solution implémentable adaptée pour déterminer quelle est la phase de décimation qu'il convient de sélectionner dans un récepteur du type du récepteur FDE 60.

**Résumé de l'invention :**

A cet effet, suivant un premier aspect, la présente invention décrit un procédé de traitement dans un récepteur de télécommunication sans fil recevant un signal monoporteuse modulé numériquement, ledit récepteur comprenant une chaîne de traitement comportant un filtre adapté pour effectuer un filtrage de mise en forme du signal dans le domaine temporel et pour opérer à une fréquence drx×B et un égaliseur fréquentiel adapté pour effectuer une égalisation fréquentielle du signal filtré et déduire les symboles de modulation du signal égalisé et pour opérer à la fréquence B, drx étant strictement supérieur à 1 ;

ledit procédé mis en oeuvre dans le récepteur comprenant, entre le filtrage et l'égalisation, une étape de décimation du signal filtré d'un facteur drx, ledit procédé mis en oeuvre dans le récepteur étant caractérisé en ce que ladite décimation du signal filtré comprend les étapes suivantes :

i/ extraction, depuis une trame de signal filtré :

◦ d'une première séquence d'échantillons, lesdits échantillons étant des échantillons d'aide à la décimation et de même puissance ; et

◦ d'une deuxième séquence d'échantillons, lesdits échantillons étant les échantillons utiles destinés à être égalisés ;

ii/ estimation de la variance de la puissance de chacune des drx phases de décimation de la première séquence d'échantillons ; comparaison entre elles des variances de puissances estimées et identification de la phase de décimation associée à la variance minimale, ladite phase identifiée étant la $n^e$ phase, avec $n \in \{0, 1, .. ; drx-1\}$ ;

iii/ décimation, d'un facteur drx, de la deuxième séquence d'échantillons, les échantillons à la fréquence d'échantillonnage égale à B et délivrés en sortie de ladite étape de décimation étant ceux de la $n^e$ phase de décimation de la deuxième séquence ;

iv/ fourniture, en entrée de l'égaliseur fréquentiel, desdits échantillons à la fréquence d'échantillonnage égale à B et délivrés en sortie de ladite étape de décimation.

Choisir la bonne phase permet de limiter les dégradations du signal et d'améliorer les performances de détection de symboles dans la constellation et améliore ainsi le taux d'erreur binaire de manière significative,

Dans des modes de réalisation, un tel procédé comprendra en outre l'une au moins des caractéristiques suivantes :

- les étapes i, ii, iii et iv sont mises en oeuvre relativement à chaque trame de signal filtré ;

- les échantillons de la première séquence sont issus d'une modulation numérique d'un premier type et les échantillons de la deuxième séquence sont issus d'une modulation numérique d'un deuxième type distinct du premier type ;

- les étapes ii et iii sont mises en oeuvre en parallèle dans un bloc de décimation, selon lequel :

la première séquence d'échantillons de la trame est fournie en entrée d'une première sous-chaîne de traitement calculant la puissance de chacun desdits échantillons, puis répartissant la séquence de puissances résultantes en drx séquences correspondant chacune à une phase de décimation, calculant la variance de chaque séquence de puissances et identifiant la phase, phase numéro n, de décimation ayant la variance la plus faible ;

en parallèle, la deuxième séquence d'échantillons de la trame est fournie en entrée d'une deuxième sous-chaîne de traitement répartissant la deuxième séquence en drx séquences correspondant chacune à une phase de décimation et fournissant lesdites drx séquences en entrée d'un multiplexeur sélectionnant celle desdites drx séquences, qui sera fournie en sortie dudit bloc de décimation à destination de l'égaliseur, correspondant à la phase de décimation numéro n en fonction de l'identifiant, n, fourni au multiplexeur par la première sous-chaîne de traitement ;

- la taille de la première séquence d'échantillons utilisée à l'étape i est sélectionnée préalablement aux étapes i à iv en fonction de la vitesse de l'étape de décimation et de la qualité de l'égalisation souhaitées.

Suivant un autre aspect, l'invention décrit un programme d'ordinateur, destiné à être stocké dans la mémoire d'un récepteur de télécommunication sans fil recevant un signal monoporteuse modulé numériquement, ledit récepteur comprenant une chaîne de traitement comportant un filtre de mise en forme du signal dans le domaine temporel adapté pour effectuer un filtrage de mise en forme du signal et pour opérer à une fréquence drx×B et un égaliseur fréquentiel adapté pour effectuer une égalisation fréquentielle du signal filtré et pour opérer à la fréquence B, drx étant strictement supérieur à 1 et comprenant en outre un microcalculateur, ledit programme d'ordinateur comprenant des instructions qui, lorsqu'elles sont exécutées sur le microcalculateur, mettent en oeuvre les étapes d'un procédé suivant le premier aspect de l'invention.

Suivant un autre aspect, l'invention décrit un récepteur de télécommunication sans fil adapté pour recevoir un signal monoporteuse modulé numériquement, ledit récepteur comprenant une chaîne de traitement comportant un filtre adapté pour effectuer un filtrage de mise en forme du signal dans le domaine temporel et pour opérer à une fréquence drx×B et un égaliseur fréquentiel adapté pour effectuer une égalisation fréquentielle du signal filtré et déduire les symboles de modulation du signal égalisé et pour opérer à la fréquence B, drx étant strictement supérieur à 1 ;

le récepteur comprenant, entre le filtre adapté et l'égaliseur, un bloc de décimation adapté pour décimer le signal filtré d'un facteur drx, ledit récepteur étant caractérisé en ce que le bloc de décimation est adapté pour effectuer les opérations suivantes :

i/ ledit bloc de décimation est adapté pour extraire, depuis une trame de signal filtré :

○ une première séquence d'échantillons, lesdits échantillons étant des échantillons d'aide à la décimation et de même puissance ; et

○ une deuxième séquence d'échantillons, lesdits échantillons étant les échantillons utiles destinés à être égalisés ;

ii/ / ledit bloc de décimation est adapté pour estimer la variance de la puissance de chacune des drx phases de décimation de la première séquence d'échantillons ; pour comparer entre elles des variances de puissances estimées et identifier la phase de décimation associée à la variance minimale, ladite phase identifiée étant la $n^e$ phase, avec $n \in \{0, 1, .. ; drx-1\}$ ;

iii/ ledit bloc de décimation est adapté pour décimer, d'un facteur drx, la deuxième séquence d'échantillons, les échantillons à la fréquence d'échantillonnage égale à B et délivrés en sortie de ladite étape de décimation étant ceux de la $n^e$ phase de décimation de la deuxième séquence ;

iv/ ledit bloc de décimation est adapté pour fournir, en entrée de l'égaliseur fréquentiel, lesdits échantillons à la fréquence d'échantillonnage égale à B et délivrés en sortie de ladite étape de décimation.

Dans des modes de réalisation, un tel récepteur comprendra en outre l'une au moins des caractéristiques suivantes :

- le bloc de décimation est adapté pour effectuer les opérations relativement à chaque trame de signal filtré ;

- les échantillons de la première séquence sont issus d'une modulation numérique d'un premier type et les échantillons de la deuxième séquence sont issus d'une modulation numérique d'un deuxième type distinct du premier type ;

- le bloc de décimation comprend :

  - une première sous-chaîne de traitement adaptée pour recevoir en entrée la première séquence d'échantillons de la trame, pour calculer la puissance de chacun desdits échantillons, puis pour répartir la séquence de puissances résultantes en drx séquences correspondant chacune à une phase de décimation, pour calculer la variance de chaque séquence de puissances et identifier la phase, phase numéro n, de décimation ayant la variance la plus faible ;

- une deuxième sous-chaîne de traitement adaptée pour recevoir en entrée la deuxième séquence d'échantillons de la trame, pour répartir la deuxième séquence en drx séquences correspondant chacune à une phase de décimation, ladite deuxième chaîne comprenant un multiplexeur adapté pour recevoir en l'entrée lesdites drx séquences, adapté pour recevoir un identifiant, n, fourni par la première sous-chaîne de traitement, et adapté pour sélectionner celle desdites drx séquences, qui sera fournie en sortie dudit bloc de décimation à destination de l'égaliseur, correspondant à la phase de décimation numéro n égal à l'identifiant fourni par la première sous-chaîne de traitement ;

les première et deuxième séquences étant traitées en parallèle.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente une chaîne de transmission monoporteuse de l'art antérieur ;

[Fig. 2] la figure 2 représente plus en détail le récepteur de la chaîne de transmission monoporteuse de la figure 1 ;

[Fig. 3] la figure 3 représente des opérations de suréchantillonnage, décimation, filtrage équivalent tx-rx mises en oeuvre par exemple dans une chaîne de transmission monoporteuse de l'art antérieur telle que représentée en figure 1 ;

[Fig. 4] la figure 4 représente la réponse fréquentielle du filtre tx-rx équivalent en réception de la figure 3 avant décimation ;

[Fig. 5] la figure 5 représente la réponse fréquentielle du filtre tx-rx équivalent en réception de la figure 3 après décimation ;

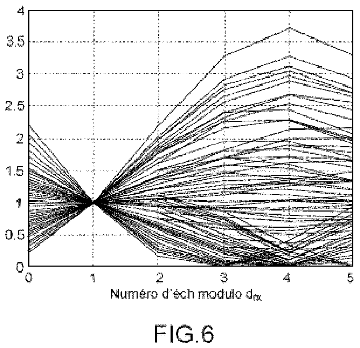

[Fig. 6] la figure 6 représente le diagramme de l'œil de la puissance, après RRC Rx ;

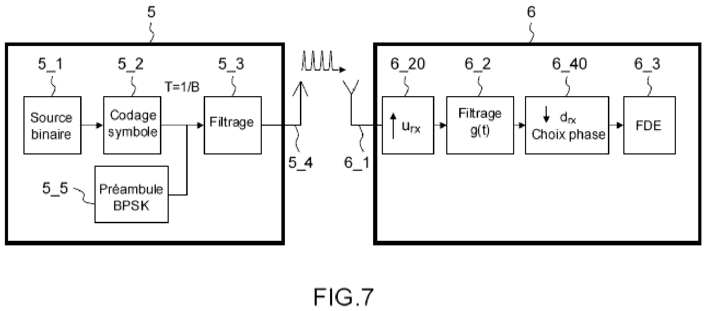

[Fig. 7] la figure 7 représente une chaîne de transmission monoporteuse dans un mode de réalisation de l'invention ;

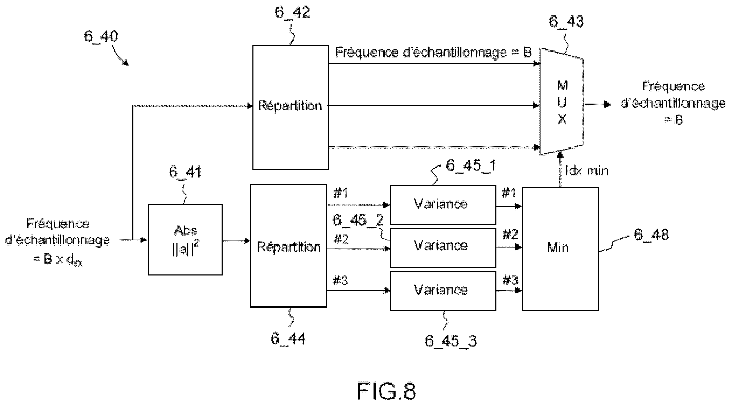

[Fig. 8] la figure 8 représente le bloc de décimation de la figure 7 adapté pour sélectionner la phase de décimation dans un mode de réalisation ;

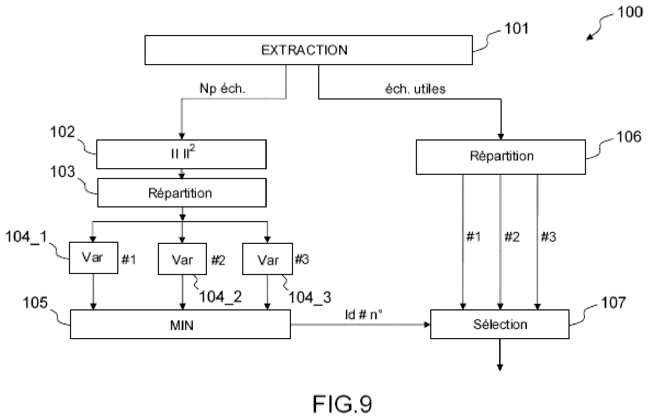

[Fig. 9] la figure 9 représente un procédé dans un mode de réalisation de l'invention.

Des références identiques peuvent être utilisées dans des figures différentes lorsqu'elles désignent des éléments identiques ou comparables.

**Description détaillée :**

La figure 7 représente une chaîne de transmission monoporteuse dans un mode de réalisation de l'invention, prenant en compte les diverses contraintes de fréquences d'échantillonnage exposées plus haut et adaptée pour permettre une sélection de la phase de décimation en réception. Cette chaîne de transmission, dans un mode de réalisation, comprend un émetteur 5 mono-porteuse comportant :

- une source binaire 5_1,
- un bloc de codage 5_2 permettant de « mapper » M bits en une valeur analogique dans le plan complexe conformément à un type de modulation numérique (par exemple, mais de façon non limitative QAM, AKQ, FSK, PSK) définissant une constellation de symboles ; notons $T = \dfrac{1}{B}$ le rythme de ces symboles complexes,

- un filtre de mise en forme 5_3 permettant de limiter la bande du signal et les interférences entre symboles (ISI),
- une antenne d'émission 5_4 émettant sur la porteuse le signal filtré ; et
- un bloc d'insertion de préambule 5_5 ;

et un récepteur 6 comportant, dans le cas considéré, notamment :

- une antenne de réception 6_1,
- un filtre 6_2,
- un organe décisionnel 6_3 permettant de retrouver les symboles complexes, de type FDE (frequency domain equalizer), dont le rôle est d'estimer les paramètres du canal (notamment les atténuations fréquentielles), d'égaliser en fréquence les échantillons fréquentiels en fonction des paramètres de canal estimés et de revenir dans le domaine temporel par une opération de transformée de Fourier inverse. L'utilisation d'un égaliseur FDE 63 impose une mise en trames des symboles complexes, qui les groupe par paquets de N, l'égaliseur 63 travaillant sur cette taille de paquet (cf.Figure 2) ;
- un bloc de suréchantillonnage 6_20 adapté pour suréchantillonner le signal reçu d'un facteur $u_{rx}$ de manière à ce que la fréquence du signal suréchantillonné et fourni en entrée du filtre 6_2 soit strictement supérieure à B ;
- un bloc de décimation 6_40, adapté pour sous-échantillonner le signal d'un facteur $d_{rx}$, de manière à ce que la fréquence du signal décimé fourni en entrée du bloc FDE 6_3 soit égale à B, et adapté pour sélectionner la phase de décimation en mettant en oeuvre un processus de traitement dans un mode de mise en oeuvre de l'invention.

La source binaire 5_1, respectivement le bloc de codage 5_2, le filtre de mise en forme 5_3 et l'antenne d'émission 5_4 de la figure 7 sont similaires à la source 51, respectivement au bloc de codage 52, au filtre de mise en forme 53 et à l'antenne d'émission 54 de la figure 1.

L'antenne de réception 6_1, respectivement le filtre 6_2, et l'organe décisionnel 6_3 de la figure 7 sont similaires à l'antenne de réception 61, respectivement le filtre 62, et l'organe décisionnel 63 de la figure 1.

Le bloc d'insertion de préambule 5_5 dans l'émetteur 5, est adapté pour ajouter, à chaque trame comportant les échantillons utiles (i.e. obtenus à partir de la source binaire), un préambule à la trame, le préambule comportant $N_p$ échantillons codés, par exemple en BPSK (i.e. {-1,+1}) ou toute autre méthode de codage avec modulation numérique délivrant des échantillons codés tous de même puissance, par exemple QPSK, 8-FSK, Zadof-Chu, ... (le type de codage des échantillons du préambule est, dans des modes de réalisation de l'invention distinct du codage de la source binaire 5_1, la fréquence symbole B étant néanmoins commune).

Dans le récepteur 6, le bloc 6_40 de décimation reçoit un signal issu du sur-échantillonnage par le bloc 6_20 et du filtrage g(t) par le bloc 6_2 dans le domaine temporel. En sortie de filtre « RRC Rx », ce signal contient $d_{rx}$ fois plus d'échantillons que requis par le bloc FDE 6_3. Le bloc 6_40 de décimation est chargé de sélectionner la position du peigne d'échantillonnage parmi $d_{rx}$ positions et de fournir en sortie le signal sous-échantillonné correspondant.

La figure 8 représente, dans un mode de réalisation de l'invention, l'architecture du bloc 6_40 de décimation pour $d_{rx}$ = 3. Le bloc 6_40 de décimation comporte ainsi deux chaînes de traitement parallèles.

La chaîne de traitement des échantillons du préambule, de même puissance comporte un bloc 6_41 de calcul de puissance, un bloc 6_44 de répartition en $d_{rx}$ = 3 flux parallèles correspondant chacun à une phase respective de décimation des échantillons du préambule, $d_{rx}$ = 3 blocs de calcul de variance en parallèle 6 45_1, 6_45_2, 6_45_3 et un bloc de détermination d'un minimum 6_48.

La chaîne de traitement des échantillons utiles (issus du codage de la source binaire) comporte un bloc 6_42 de répartition en $d_{rx}$ = 3 flux parallèles correspondant chacun à une phase respective de décimation des échantillons utiles et un multiplexeur 6_43, piloté par un signal de commande provenant du bloc de détermination d'un minimum 6_48.

Le bloc 6_40 de décimation est adapté pour mettre en oeuvre le processus 100 ci-dessous détaillé en référence à la figure 9. Dans un mode de réalisation, le bloc 6_40 de décimation comprend un calculateur et une mémoire stockant des instructions logicielles qui, lorsqu'elles sont mises en oeuvre sur le calculateur, implémentent les étapes détaillées ci-dessous en référence à la figure 9.

Ainsi comme représentée en figure 9, pour chaque trame reçue par le bloc 6_40 de décimation, dans une étape 101, les $N_p$ échantillons codés de même puissance du préambule, à la fréquence d'échantillonnage B × $d_{rx}$, sont extraits du préambule de la trame par le bloc 6_40 de décimation et sont fournis en entrée du bloc 6_41 de calcul de puissance tandis que les échantillons utiles de cette trame, à la fréquence d'échantillonnage B × $d_{rx}$, sont extraits de la trame par le bloc 6_40 de décimation et sont fournis, eux, en entrée du bloc 6_42 de répartition.

Dans une étape 102, le bloc 6_41 de calcul de puissance calcule la puissance des échantillons ($\| \|^2$) du préambule et fournit le flux des valeurs de puissance au bloc 6_44 de répartition.

Dans une étape 103, le bloc 6_44 de répartition répartit le flux des puissances des échantillons du préambule en $d_{rx}$ = 3 flux parallèles correspondant chacun à une phase respective n° i de décimation des échantillons de puissance du préambule et fournit chaque phase de décimation n°i à un bloc respectif de calcul de variance 6_45_i, i= 1 à $d_{rx}$ = 3.

Dans les étapes 104_i, i = 1, 2, 3, par exemple mises en oeuvre en parallèle, chaque bloc de calcul de variance 6_45_i, i= 1 à $d_{rx}$ = 3, calcule la variance des puissances reçues et délivre la valeur de variance calculée pour la phase n°i au bloc de détermination d'un minimum 6_48.

Dans une étape 105, le bloc de détermination d'un minimum 6_48 compare entre elle les $d_{rx}$(= 3) variances des puissances calculées, sélectionne la plus faible, identifie la phase correspondant à la variance la plus faible, nommée ici phase n et fournit l'identifiant « n » de la phase au multiplexeur 6_43.

En parallèle aux étapes 102 à 105, dans une étape 106, le bloc 6_42 de répartition répartit le flux des échantillons utiles en $d_{rx}$ = 3 flux parallèles correspondant chacun à une phase respective n° i de décimation des échantillons utiles et fournit chaque phase de décimation n°i au multiplexeur 6_43.

Dans une étape 107, le multiplexeur 6_43 sélectionne la phase de décimation n° n parmi les $d_{rx}$ phases de décimation reçues sur ses entrées et c'est cette seule phase de décimation, et non les autres phases, qui est délivrée en sortie du bloc 6_40 de décimation et fournie au bloc d'égalisation 6_3 (les échantillons du préambule, eux, ne sont pas fournis, ils ne comportent pas d'information utile à décoder et ne sont utilisés dans le mode de réalisation considéré, que pour identifier la phase de décimation la meilleure).

Ainsi, ce n'est pas l'amplitude des échantillons du préambule qui est utilisée mais la puissance de chaque échantillon. Cela permet de s'affranchir d'une éventuelle rotation de phase des échantillons.

Dans un mode de réalisation, la phase de décimation optimale est sélectionnée trame par trame, en fonction du préambule de chaque trame filtrée présentée en entrée du bloc de décimation.

Dans un mode de réalisation, la longueur de l'estimation (assurant la précision de l'estimation) s'effectue sur $L_{var}$ échantillons, $L_{var}$ étant strictement inférieur ou égal à la longueur du préambule $N_p$ ; dans un mode de réalisation, la valeur de $L_{var}$ et/ou $N_p$ est sélectionnée avant la mise en oeuvre du procédé 100 sur une trame, en fonction de la vitesse de l'étape de décimation et de la qualité de l'égalisation souhaitées.

La figure 6 propose un « diagramme de l'œil » des échantillons du préambule, avec en abscisse le rang de l'échantillon modulo $d_{rx}$ et en ordonnée la puissance de l'échantillon. L'invention permet de trouver la phase de décimation des échantillons correspondant à un noeud de ce diagramme. La meilleure phase, ici par exemple avec $d_{rx}$ = 6, celle correspondant à la variance minimum, est la phase #1 (les phases sont numérotées 0 à $d_{rx}$ - 1 sur la figure 6), celle qui présente des valeurs toutes égales (ici le cas idéal, sans bruit blanc), le préambule ne contenant que des valeurs de même puissance.

La probabilité de mauvaise détection (i.e. de choisir la phase qui n'est pas attendue) en mettant en oeuvre l'invention a été étudiée pour différentes valeurs de SNR et pour deux valeurs de $L_{var}$. La probabilité est quasiment nulle aux SNR d'intérêt (par exemple, >18 dB, dans l'application).

Le filtre considéré ci-dessus est un filtre RRC mais l'invention reste valable avec n'importe quelle paire de filtres adaptés.

Pus grand est le nombre de coefficients du filtre, plus il existera une phase de décimation donnant lieu à une réponse fréquentielle plate du filtre après décimation (en fonction de la fréquence d'échantillonnage, de la bande du signal) : un critère quant à la largeur de zone plate permet ainsi dans un mode de réalisation de déterminer le nombre de coefficients du filtre.

**Revendications**

**1.** Procédé de traitement dans un récepteur (6) de télécommunication sans fil recevant un signal monoporteuse modulé numériquement, ledit récepteur (6) comprenant une chaîne de traitement comportant un filtre adapté (6_2) pour effectuer un filtrage de mise en forme du signal dans le domaine temporel et pour opérer à une fréquence drx×B et un égaliseur fréquentiel (6_3) adapté pour effectuer une égalisation fréquentielle du signal filtré et déduire les symboles de modulation du signal égalisé et pour opérer à la fréquence B, drx étant strictement supérieur à 1 ; ledit procédé mis en oeuvre dans le récepteur (6) comprenant, entre le filtrage et l'égalisation, une étape de décimation du signal filtré d'un facteur drx, ledit procédé mis en oeuvre dans le récepteur (6) étant **caractérisé en ce que** ladite décimation du signal filtré comprend les étapes suivantes :

    i/ extraction, depuis une trame de signal filtré :

        - d'une première séquence d'échantillons, lesdits échantillons étant des échantillons d'aide à la décimation et de même puissance ; et
        - d'une deuxième séquence d'échantillons, lesdits échantillons étant les échantillons utiles destinés à être égalisés ;

    ii/ estimation de la variance de la puissance de chacune des drx phases de décimation de la première séquence d'échantillons ; comparaison entre elles des variances de puissances estimées et identification de la phase de décimation associée à la variance minimale, ladite phase identifiée étant la $n^e$ phase, avec $n \in \{0, 1, .. ; drx-1\}$ ;

iii/ décimation, d'un facteur drx, de la deuxième séquence d'échantillons, les échantillons à la fréquence d'échantillonnage égale à B et délivrés en sortie de ladite étape de décimation étant ceux de la $n^e$ phase de décimation de la deuxième séquence ;

iv/ fourniture, en entrée de l'égaliseur fréquentiel, desdits échantillons à la fréquence d'échantillonnage égale à B et délivrés en sortie de ladite étape de décimation.

**2.** Procédé de traitement dans un récepteur (6) de télécommunication sans fil selon la revendication 1, selon lequel les étapes i, ii, iii et iv sont mises en oeuvre relativement à chaque trame de signal filtré.

**3.** Procédé de traitement dans un récepteur (6) de télécommunication sans fil selon la revendication 1 ou 2, selon lequel les échantillons de la première séquence sont issus d'une modulation numérique d'un premier type et les échantillons de la deuxième séquence sont issus d'une modulation numérique d'un deuxième type distinct du premier type.

**4.** Procédé de traitement dans un récepteur (6) de télécommunication sans fil selon l'une des revendications précédentes, selon lequel les étapes ii et iii sont mises en oeuvre en parallèle dans un bloc de décimation (6_40), selon lequel :

- la première séquence d'échantillons de la trame est fournie en entrée d'une première sous-chaîne de traitement calculant la puissance de chacun desdits échantillons, puis répartissant la séquence de puissances résultantes en drx séquences correspondant chacune à une phase de décimation, calculant la variance de chaque séquence de puissances et identifiant la phase, phase numéro n, de décimation ayant la variance la plus faible ;
- en parallèle, la deuxième séquence d'échantillons de la trame est fournie en entrée d'une deuxième sous-chaîne de traitement répartissant la deuxième séquence en drx séquences correspondant chacune à une phase de décimation et fournissant lesdites drx séquences en entrée d'un multiplexeur (6_43) sélectionnant celle desdites drx séquences, qui sera fournie en sortie dudit bloc de décimation (6_40) à destination de l'égaliseur (6_3), correspondant à la phase de décimation numéro n en fonction de l'identifiant, n, fourni au multiplexeur par la première sous-chaîne de traitement.

**5.** Procédé de traitement dans un récepteur (6) de télécommunication sans fil selon l'une des revendications précédentes, selon lequel la taille de la première séquence d'échantillons utilisée à l'étape i est sélectionnée préalablement aux étapes i à iv en fonction de la vitesse de l'étape de décimation et de la qualité de l'égalisation souhaitées.

**6.** Programme d'ordinateur, destiné à être stocké dans la mémoire d'un récepteur (6) de télécommunication sans fil recevant un signal monoporteuse modulé numériquement, ledit récepteur comprenant une chaîne de traitement comportant un filtre de mise en forme (6_2) du signal dans le domaine temporel adapté pour effectuer un filtrage de mise en forme du signal et pour opérer à une fréquence drx×B et un égaliseur fréquentiel (6_3) adapté pour effectuer une égalisation fréquentielle du signal filtré et pour opérer à la fréquence B, drx étant strictement supérieur à 1 et comprenant en outre un microcalculateur, ledit programme d'ordinateur comprenant des instructions qui, lorsqu'elles sont exécutées sur le microcalculateur, mettent en oeuvre les étapes d'un procédé selon l'une des revendications précédentes.

**7.** Récepteur de télécommunication sans fil (6) adapté pour recevoir un signal monoporteuse modulé numériquement, ledit récepteur (6) comprenant une chaîne de traitement comportant un filtre adapté (6_2) pour effectuer un filtrage de mise en forme du signal dans le domaine temporel et pour opérer à une fréquence drx×B et un égaliseur fréquentiel (6_3) adapté pour effectuer une égalisation fréquentielle du signal filtré et déduire les symboles de modulation du signal égalisé et pour opérer à la fréquence B, drx étant strictement supérieur à 1 ;

le récepteur (6) comprenant, entre le filtre adapté (6_2) et l'égaliseur (6_3), un bloc de décimation (6_40) adapté pour décimer le signal filtré d'un facteur drx, ledit récepteur (6) étant **caractérisé en ce que** le bloc de décimation est adapté pour effectuer les opérations suivantes :

i/ ledit bloc de décimation (6_40) est adapté pour extraire, depuis une trame de signal filtré :

- une première séquence d'échantillons, lesdits échantillons étant des échantillons d'aide à la décimation et de même puissance ; et
- une deuxième séquence d'échantillons, lesdits échantillons étant les échantillons utiles destinés à être égalisés ;

ii/ / ledit bloc de décimation (6_40) est adapté pour estimer la variance de la puissance de chacune des drx phases de décimation de la première séquence d'échantillons ; pour comparer entre elles des variances de puissances estimées et identifier la phase de décimation associée à la variance minimale, ladite phase identifiée étant la $n^e$ phase, avec $n \in \{0, 1, .. ; drx-1\}$ ;

iii/ ledit bloc de décimation (6_40) est adapté pour décimer, d'un facteur drx, la deuxième séquence d'échantillons, les échantillons à la fréquence d'échantillonnage égale à B et délivrés en sortie de ladite étape de décimation étant ceux de la $n^e$ phase de décimation de la deuxième séquence ;

iv/ ledit bloc de décimation (6_40) est adapté pour fournir, en entrée de l'égalisateur fréquentiel, lesdits échantillons à la fréquence d'échantillonnage égale à B et délivrés en sortie de ladite étape de décimation.

8. Récepteur de télécommunication sans fil (6) selon la revendication 7, dans lequel le bloc de décimation (6_40) est adapté pour effectuer les opérations relativement à chaque trame de signal filtré.

9. Récepteur de télécommunication sans fil (6) selon la revendication 7 ou 8, dans lequel les échantillons de la première séquence sont issus d'une modulation numérique d'un premier type et les échantillons de la deuxième séquence sont issus d'une modulation numérique d'un deuxième type distinct du premier type.

10. Récepteur de télécommunication sans fil (6) selon l'une des revendications 7 à 9, dans lequel le bloc de décimation (6_40) comprend :

- une première sous-chaîne de traitement adaptée pour recevoir en entrée la première séquence d'échantillons de la trame, pour calculer la puissance de chacun desdits échantillons, puis pour répartir la séquence de puissances résultantes en drx séquences correspondant chacune à une phase de décimation, pour calculer la variance de chaque séquence de puissances et identifier la phase, phase numéro n, de décimation ayant la variance la plus faible ;

une deuxième sous-chaîne de traitement adaptée pour recevoir en entrée la deuxième séquence d'échantillons de la trame, pour répartir la deuxième séquence en drx séquences correspondant chacune à une phase de décimation, ladite deuxième chaîne comprenant un multiplexeur (6_43) adapté pour recevoir en l'entrée lesdites drx séquences, adapté pour recevoir un identifiant, n, fourni par la première sous-chaîne de traitement, et adapté pour sélectionner celle desdites drx séquences, qui sera fournie en sortie dudit bloc de décimation (6_40) à destination de l'égaliseur (6_3), correspondant à la phase de décimation numéro n égal à l'identifiant fourni par la première sous-chaîne de traitement ;

les première et deuxième séquences étant traitées en parallèle.


## Patentansprüche

1. Verarbeitungsverfahren in einem drahtlosen Telekommunikationsempfänger (6), der ein digital moduliertes Einträgersignal empfängt, wobei der Empfänger (6) eine Verarbeitungskette umfasst, die ein zum Durchführen einer Formungsfilterung auf dem Signal in der Zeitdomäne und zum Arbeiten auf einer Frequenz drx×B angepasstes Filter (6_2) und einen zum Durchführen einer Frequenzentzerrung des gefilterten Signals und zum Ableiten der Modulationssymbole des entzerrten Signals und zum Arbeiten auf der Frequenz B angepassten Frequenzentzerrer (6_3) umfasst, wobei drx strikt größer als 1 ist;

wobei das in dem Empfänger (6) implementierte Verfahren zwischen der Filterung und der Entzerrung einen Schritt des Dezimierens des gefilterten Signals um einen Faktor drx umfasst, wobei das in dem Empfänger (6) implementierte Verfahren **dadurch gekennzeichnet ist, dass** die Dezimierung des gefilterten Signals die folgenden Schritte umfasst:

i/ Extrahieren, aus einem gefilterten Signalframe, von Folgendem:

- einer ersten Abtastwert-Folge, wobei die Abtastwerte Abtastwerte zum Unterstützen der Dezimierung und von gleicher Leistung sind; und
- einer zweiten Abtastwert-Folge, wobei die Abtastwerte die zu entzerrenden Nutzabtastwerte sind;

ii/ Schätzen der Varianz der Leistung jeder der drx Dezimierungsphasen der ersten Abtastwert-Folge; Vergleichen der Varianzen von geschätzten Leistungen miteinander und Identifizieren der der minimalen Varianz zugeordneten Dezimierungsphase, wobei die identifizierte Phase die n-te Phase ist, mit n $\in$ {0, 1, .. ; drx-1};
iii/ Dezimieren der zweiten Abtastwert-Folge um einen Faktor drx, wobei die Abtastwerte mit der Abtastfrequenz gleich B, und geliefert am Ausgang des Dezimierungsschritts, diejenigen der n-ten Dezimierungsphase der zweiten Folge sind;
iv/ Bereitstellen, am Eingang des Frequenzentzerrers, der Abtastwerte mit der Abtastfrequenz gleich B, und geliefert am Ausgang des Dezimierungsschritts.

2. Verarbeitungsverfahren in einem drahtlosen Telekommunikationsempfänger (6) nach Anspruch 1, nach dem die Schritte i, ii, iii und iv in Bezug auf jeden gefilterten Signalframe implementiert werden.

3. Verarbeitungsverfahren in einem drahtlosen Telekommunikationsempfänger (6) nach Anspruch 1 oder 2, nach dem die Abtastwerte der ersten Folge aus einer digitalen Modulation eines ersten Typs stammen und die Abtastwerte der zweiten Folge aus einer digitalen Modulation eines sich vom ersten Typ unterscheidenden zweiten Typs stammen.

4. Verarbeitungsverfahren in einem drahtlosen Telekommunikationsempfänger (6) nach einem der vorhergehenden Ansprüche, nach dem die Schritte ii und iii parallel in einem Dezimierungsblock (6_40) implementiert werden, nach dem:

   - die erste Abtastwert-Folge des Frame am Eingang einer ersten Verarbeitungssubkette bereitgestellt wird, die die Leistung jedes der Abtastwerte berechnet, dann die Folge von resultierenden Leistungen in drx Folgen aufteilt, die jeweils einer Dezimierungsphase entsprechen, die Varianz jeder Leistungsfolge berechnet und die Dezimierungsphase, Phase Nummer n, mit der geringsten Varianz identifiziert;
   - parallel dazu die zweite Abtastwert-Folge des Frame am Eingang einer zweiten Verarbeitungssubkette bereitgestellt wird, die die zweite Folge in drx Folgen aufteilt, die jeweils einer Dezimierungsphase entsprechen, und die drx Folgen am Eingang eines Multiplexers (6_43) bereitstellt, der diejenige der drx Folgen auswählt, die am Ausgang des Dezimierungsblocks (6_40) dem Entzerrer (6_3) bereitgestellt sein wird, entsprechend der Dezimierungsphase Nummer n in Abhängigkeit von der Kennung n, die von der ersten Verarbeitungssubkette dem Multiplexer bereitgestellt wird.

5. Verarbeitungsverfahren in einem drahtlosen Telekommunikationsempfänger (6) nach einem der vorhergehenden Ansprüche, nach dem die Größe der in Schritt i verwendeten ersten Abtastwert-Folge vor den Schritten i bis iv in Abhängigkeit von der gewünschten Geschwindigkeit des Dezimierungsschritts und der gewünschten Entzerrungsqualität ausgewählt wird.

6. Computerprogramm, dazu bestimmt im Speicher eines drahtlosen Telekommunikationsempfängers (6), der ein digital moduliertes Einträgersignal empfängt, gespeichert zu werden, wobei der Empfänger eine Verarbeitungskette, die ein Formungsfilter (6_2) des Signals in der Zeitdomäne umfasst, das zum Durchführen einer Formungsfilterung auf dem Signal und zum Arbeiten auf einer Frequenz drx$\times$B angepasst ist, und einen Frequenzentzerrer (6_3) umfasst, der zum Durchführen einer Frequenzentzerrung des gefilterten Signals und zum Arbeiten auf der Frequenz B angepasst ist, wobei drx strikt größer als 1 ist, und ferner einen Mikrocomputer umfasst, wobei das Computerprogramm Befehle umfasst, die bei Ausführung auf dem Mikrocomputer die Schritte eines Verfahrens nach einem der vorhergehenden Ansprüche implementieren.

7. Drahtloser Telekommunikationsempfänger (6), der zum Empfangen eines digital modulierten Einträgersignals angepasst ist, wobei der Empfänger (6) eine Verarbeitungskette, die ein zum Durchführen einer Formungsfilterung auf dem Signal in der Zeitdomäne und zum Arbeiten auf einer Frequenz drx$\times$B angepasstes Filter (6_2) und einen Frequenzentzerrer (6_3) umfasst, der zum Durchführen einer Frequenzentzerrung des gefilterten Signals und zum Ableiten der Modulationssymbole des entzerrten Signals und zum Arbeiten auf der Frequenz B angepasst ist, wobei drx strikt größer als 1 ist;
wobei der Empfänger (6) zwischen dem angepassten Filter (6_2) und dem Entzerrer (6_3) einen Dezimierungsblock (6_40) umfasst, der zum Dezimieren des gefilterten Signals um einen Faktor drx angepasst ist, wobei der Empfänger (6) **dadurch gekennzeichnet ist, dass** der Dezimierungsblock zum Durchführen der folgenden Vorgänge angepasst ist:

   i/ der Dezimierungsblock (6_40) ist angepasst zum Extrahieren, aus einem gefilterten Signalframe, von Folgendem:

- einer ersten Abtastwert-Folge, wobei die Abtastwerte Abtastwerte zum Unterstützen der Dezimierung und von gleicher Leistung sind; und
- einer zweiten Abtastwert-Folge, wobei die Abtastwerte die zu entzerrenden Nutzabtastwerte sind;

ii/ der Dezimierungsblock (6_40) angepasst ist zum Schätzen der Varianz der Leistung jeder der drx Dezimierungsphasen der ersten Abtastwert-Folge; zum Vergleichen geschätzter Leistungsvarianzen miteinander und zum Identifizieren der der minimalen Varianz zugeordneten Dezimierungsphase, wobei die identifizierte Phase die n-te Phase ist, mit $n \in \{0, 1, .. ; drx-1\}$;

iii/ der Dezimierungsblock (6_40) zum Dezimieren der zweiten Abtastwert-Folge um einen Faktor drx angepasst ist, wobei die Abtastwerte mit der Abtastfrequenz gleich B, und geliefert am Ausgang des Dezimierungsschritts, diejenigen der n-ten Dezimierungsphase der zweiten Folge sind;

iv/ der Dezimierungsblock (6_40) zum Bereitstellen, am Eingang des Frequenzentzerrers, der Abtastwerte mit der Abtastfrequenz B angepasst ist, und geliefert am Ausgang des Dezimierungsschritts.

8. Drahtloser Telekommunikationsempfänger (6) nach Anspruch 7, wobei der Dezimierungsblock (6_40) zum Durchführen der Vorgänge relativ zu jedem gefilterten Signalframe angepasst ist.

9. Drahtloser Telekommunikationsempfänger (6) nach Anspruch 7 oder 8, wobei die Abtastwerte der ersten Folge aus einer digitalen Modulation eines ersten Typs stammen und die Abtastwerte der zweiten Folge aus einer digitalen Modulation eines sich vom ersten Typ unterscheidenden zweiten Typs stammen.

10. Drahtloser Telekommunikationsempfänger (6) nach einem der Ansprüche 7 bis 9, wobei der Dezimierungsblock (6_40) Folgendes umfasst:

- eine erste Verarbeitungssubkette, angepasst zum Empfangen, am Eingang, der ersten Abtastwert-Folge des Frame, zum Berechnen der Leistung jedes der Abtastwerte, dann zum Aufteilen der Folge von resultierenden Leistungen in drx Folgen, die jeweils einer Dezimierungsphase entsprechen, zum Berechnen der Varianz jeder Leistungsfolge und Identifizieren der Dezimierungsphase, Phasen Nummer n, mit der geringsten Varianz;

eine zweite Verarbeitungssubkette, angepasst zum Empfangen, am Eingang, der zweiten Abtastwert-Folge des Frame, zum Aufteilen der zweiten Folge in drx Folgen, die jeweils einer Dezimierungsphase entsprechen, wobei die zweite Kette einen Multiplexer (6_43) umfasst, angepasst zum Empfangen, am Eingang, der drx Folgen, angepasst zum Empfangen einer Kennung, n, bereitgestellt von der ersten Verarbeitungssubkette, und angepasst zum Auswählen derjenigen der drx Folgen, die am Ausgang des Dezimierungsblocks (6_40) dem Entzerrer (6_3) bereitgestellt sein wird, die der Dezimierungsphase Nummer n entspricht, die gleich der von der ersten Verarbeitungssubkette bereitgestellten Kennung ist;

wobei die erste und die zweite Folge parallel verarbeitet werden.

**Claims**

1. A processing method in a wireless telecommunications receiver (6) receiving a digitally modulated single-carrier signal, said receiver (6) comprising a processing chain having a matched filter (6_2) to perform shaping filtering on the signal in the time domain and to operate at a frequency $drx \times B$ and a frequency equaliser (6_3) adapted to perform frequency equalisation on the filtered signal and deduce the modulation symbols of the equalised signal and to operate at the frequency B, drx being strictly greater than 1;

said method implemented in the receiver (6) comprising, between the filtering and the equalisation, a step of decimating the filtered signal by a factor drx, said method implemented in the receiver (6) being **characterised in that** said decimation of the filtered signal comprises the following steps:

i/ extracting, from a filtered signal frame:

- a first sequence of samples, said samples being samples for aiding the decimation and having the same power; and
- a second sequence of samples, said samples being the payload samples intended to be equalised;

ii/ estimating the variance in the power of each of the drx decimation phases of the first sequence of samples; comparing the estimated power variances with one another and identifying the decimation phase associated with the minimum variance, said identified phase being the $n^{th}$ phase, with $n \in \{0, 1, .. ; drx-1\}$;

iii/ decimating the second sequence of samples by a factor drx, the samples at the sampling frequency equal to B and delivered at the output of said decimation step being those of the $n^{th}$ decimation phase of the second sequence;

iv/ providing, at the input of the frequency equaliser, said samples at the sampling frequency equal to B and delivered at the output of said decimation step.

**2.** The processing method in a wireless telecommunications receiver (6) according to claim 1, according to which steps i, ii, iii and iv are implemented in relation to each filtered signal frame.

**3.** The processing method in a wireless telecommunications receiver (6) according to claim 1 or 2, according to which the samples of the first sequence result from a digital modulation of a first type and the samples of the second sequence result from a digital modulation of a second type different from the first type.

**4.** The processing method in a wireless telecommunications receiver (6) according to one of the preceding claims, according to which steps ii and iii are implemented in parallel in a decimation block (6_40), according to which:

- the first sequence of samples of the frame is provided at the input of a first processing sub-chain computing the power of each of said samples, then distributing the sequence of resulting powers into drx sequences each corresponding to a decimation phase, computing the variance of each sequence of powers and identifying the decimation phase, phase number n, having the lowest variance;
- in parallel, the second sequence of samples of the frame is provided at the input of a second processing sub-chain distributing the second sequence into drx sequences each corresponding to a decimation phase and providing said drx sequences at the input of a multiplexer (6_43) selecting that one of said drx sequences, which will be provided at the output of said decimation block (6_40) to the equaliser (6_3), corresponding to the decimation phase number n depending on the identifier, n, provided to the multiplexer by the first processing sub-chain.

**5.** The processing method in a wireless telecommunications receiver (6) according to one of the preceding claims, according to which the size of the first sequence of samples used in step i is selected prior to steps i to iv depending on the desired speed of the decimation step and of the desired quality of the equalisation.

**6.** A computer programme, intended to be stored in the memory of a wireless telecommunications receiver (6) receiving a digitally modulated single-carrier signal, said receiver comprising a processing chain having a shaping filter (6_2) of the signal in the time domain adapted to perform shaping filtering on the signal and to operate at a frequency drx×B and a frequency equaliser (6_3) adapted to perform frequency equalisation on the filtered signal and to operate at the frequency B, drx being strictly greater than 1, and further comprising a microcomputer, said computer programme comprising instructions that, when executed on the microcomputer, implement the steps of a method according to one of the preceding claims.

**7.** A wireless telecommunications receiver (6) adapted to receive a digitally modulated single-carrier signal, said receiver (6) comprising a processing chain having a matched filter (6_2) to perform shaping filtering on the signal in the time domain and to operate at a frequency drx×B and a frequency equaliser (6_3) adapted to perform frequency equalisation on the filtered signal and deduce the modulation symbols of the equalised signal and to operate at the frequency B, drx being strictly greater than 1;

the receiver (6) comprising, between the matched filter (6_2) and the equaliser (6_3), a decimation block (6_40) adapted to decimate the filtered signal by a factor drx, said receiver (6) being **characterised in that** the decimation block is adapted to perform the following operations:

i/ said decimation block (6_40) is adapted to extract, from a filtered signal frame:

- a first sequence of samples, said samples being samples for aiding the decimation and having the same power; and
- a second sequence of samples, said samples being the payload samples intended to be equalised;

ii/ said decimation block (6_40) is adapted to estimate the variance in the power of each of the drx decimation phases of the first sequence of samples; to compare estimated power variances with one another and identify the decimation phase associated with the minimum variance, said identified phase being the $n^{th}$ phase, with n $\in$ {0, 1, .. ; drx-1};

iii/ said decimation block (6_40) is adapted to decimate the second sequence of samples by a factor drx, the samples at the sampling frequency equal to B and delivered at the output of said decimation step being those of the $n^{th}$ decimation phase of the second sequence;

iv/ said decimation block (6_40) is adapted to provide, at the input of the frequency equaliser, said samples at the sampling frequency equal to B and delivered at the output of said decimation step.

8. The wireless telecommunications receiver (6) according to claim 7, wherein the decimation block (6_40) is adapted to perform the operations in relation to each filtered signal frame.

9. The wireless telecommunications receiver (6) according to claim 7 or 8, wherein the samples of the first sequence result from a digital modulation of a first type and the samples of the second sequence result from a digital modulation of a second type different from the first type.

10. The wireless telecommunications receiver (6) according to one of claims 7 to 9, wherein the decimation block (6_40) comprises:

- a first processing sub-chain adapted to receive, at the input, the first sequence of samples of the frame, to compute the power of each of said samples, then to distribute the sequence of resulting powers into drx sequences each corresponding to a decimation phase, to compute the variance of each sequence of powers and identify the decimation phase, phase number n, having the lowest variance;
a second processing sub-chain adapted to receive, at the input, the second sequence of samples of the frame, to distribute the second sequence into drx sequences each corresponding to a decimation phase, said second chain comprising a multiplexer (6_43) adapted to receive, at the input, said drx sequences, adapted to receive an identifier, n, provided by the first processing sub-chain, and adapted to select that one of said drx sequences, which will be provided at the output of said decimation block (6_40) to the equaliser (6_3), corresponding to the decimation phase number n equal to the identifier provided by the first processing sub-chain;
the first and second sequence being processed in parallel.

FIG.1

Fréquence d'échantillonnage = $F_{s,rx}$ → **Filtre RRC** → Sync Temp → (x) → Fréquence d'échantillonnage = B

Auto-correlation
Variable de décision
Estimation CFO grossière

Traitement domaine temporel

N-pt FFT → Estimation de canal → Egalisation - ZF → N-pt iFFT → Facteur de remise à échelle FFT

buffer

Constellation normalisée

Tracking de phase (en aveugle ou à l'aide de pilotes) → Correction DC (en aveugle ou à l'aide de pilotes)

Traitement domaine fréquentiel

Traitement spécifique mono-porteuse en domaine temporel

FIG.2

FIG.3

Taux éch: $(u_{tx} \times u_{rx})/_{d_{tx} \times d_{rx}} \times B = B$

FIG.5

Taux éch: $(u_{tx} \times u_{rx})/_{d_{tx}} \times B$

FIG.4

EP 4 213 450 B1

Numéro d'éch modulo $d_{rx}$

FIG.6

EP 4 213 450 B1

FIG.7

EP 4 213 450 B1

FIG.8

FIG.9

EP 4 213 450 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Implementation of single carrier packet transmission with frequency domain equalization. **GHEORGHIU, V ; KAMEDA, S. ; TAKAGI, T ; TSUBOUCHI, K. ; ADACHI, F.** In 2008 IEEE 68th Vehicular Technology Conférence. IEEE, Septembre 2008, 1-5